Europäisches Patentamt

European Patent Office

Office européen des brevets

(11) Publication number: **0 284 687**
**A2**

## EUROPEAN PATENT APPLICATION

(21) Application number: 87309888.3

(22) Date of filing: 09.11.87

(51) Int. Cl.⁴: **G11B 23/107** , G11B 23/04

(30) Priority: 31.03.87 US 32382

(43) Date of publication of application:
**05.10.88 Bulletin 88/40**

(84) Designated Contracting States:
**AT BE CH DE ES FR GB GR IT LI LU NL SE**

(71) Applicant: **SHAPE INC.**
**Biddeford Industrial Park P.O. Box 366**
**Biddeford Maine 04005(US)**

(72) Inventor: **Laverriere, Guy P.**
**49 Wentworth Street**
**Biddeford Maine 04005(US)**

(74) Representative: **Skone James, Robert Edmund**
**et al**
**GILL JENNINGS & EVERY 53-64 Chancery**
**Lane**
**London WC2A 1HN(GB)**

(54) **Tape cartridge.**

(57) A tape cartridge (56) has a spool hub (66) including an annular wall (68) with a set of centering ribs or projections (70') circumferentially spaced around the inside circumference thereof. These projections direct, center and maintain a brake button (61) concentrical relative to the hub (66) to prevent the brake button (61) from becoming misaligned in the cartridge during assembly or use. In addition, the brake button includes a cross-shaped recess (73) for receiving a correspondingly shaped projection formed on the lower part of the cartridge to prevent the brake button from rotating and to facilitate assembly and prevent binding of the centered button.

FIG. 3

## TAPE CARTRIDGE

This invention relates to tape or ribbon cartridges and is particularly concerned with an improved hub structure of such a cartridge which facilitates proper alignment of a brake button relative to the hub.

Ribbon cartridges, known in the art as "Segoma" cartridges, include a single, circular spool which is rotatable within a substantially square cartridge. The cartridge has an opening in a corner thereof to allow the ribbon wound on the spool to be withdrawn from the cartridge. There is also an opening in the top part of the cartridge, which allows the spool to be coupled to an external drive means to turn the spool and dispense the ribbon.

The spool includes a hub with an annular wall which, in the assembled cartridge, surrounds a circular brake button mounted on the bottom cartridge part and biased by a coil spring. The brake button is intended to "brake" or prevent rotation of the spool, except when desired. That is, the coil spring normally biases the brake button against the hub to interlock corresponding, respective teeth and "brake" the spool. Only when the brake button is pushed back into the cartridge against the force of the spring via, e.g., the external drive means can the hub be rotated and the ribbon be dispensed.

The diameter of the annular wall of the hub is significantly greater than the diameter of the brake button to allow easy mounting of the hub relative to the brake button during assembly. This difference in diameters results in a loose fit between the brake button and the hub, and this may cause the brake button to become misaligned, i.e., lie off centre of the hub during assembly and/or use. As a result, the brake button cannot function properly to prevent undesirable dispensing of the ribbon and the external drive means cannot properly align with the brake button.

Accordingly, it is an object of the present invention to provide a cartridge constructed in such a way as to help ensure positive, concentric alignment of the brake button relative to the hub.

The invention also provides a cartridge having a hub structure which may be made relatively easy to manufacture, does not otherwise interfere with assembly or operation of the cartridge, and which provides facilitated movement of the brake button relative to the cartridge.

To this end, according to this invention, a tape cartridge which comprises:-(a) first and second cartridge parts, (b) a circular brake button which has a substantially planar part , biased for movement between the first and second cartridge parts; and, (c) a spool including a flange and an integrally formed hub, the hub including a circular annular wall projecting from one surface thereof, is characterised in that projecting means is formed on the inner circumference of the annular wall, and a surface of the projecting means abuts the circular periphery of the brake button and maintains a substantially concentric relationship between the circular brake button and the circular annular wall of the hub.

These projecting means direct, centre and contain the brake button relative to the hub when assembled, thus preventing the brake button from becoming misaligned in the cartridge during assembly and use, and ensuring proper engagement of the brake button with the external drive means. In addition, the brake button preferably also includes a cross-shaped recess for receiving a correspondingly shaped projection formed on the lower part of the cartridge. This configuration facilitates automated mounting of the brake button and prevents binding of the brake button once directed, centred and contained by projecting means.

An example of type or ribbon cartridge in accordance with the invention will now be described with reference to the accompanying drawings in which:-

FIG. 1 is a perspective, exploded view of a conventional "Segoma"-type cartridge;

FIG. 2 is a side, cross-sectional view of the brake button and spool of the conventional cartridge shown in FIG. 1, illustrating particularly, the off-centre orientation of the brake button relative to the hub of the spool;

FIG. 3 is a side, cross-sectional view of the brake button and spool of a cartridge in accordance with illustrating particularly the brake button centred withing the hub of the spool;

FIG. 4 is an exploded, perspective view of the brake button, spring and cartridge base of the cartridge in accordance with the present invention, and, FIG. 5 is a bottom plan view of the spool of the cartridge in accordance with the present invention, illustrating particularly the plurality of radial projections formed on the hub.

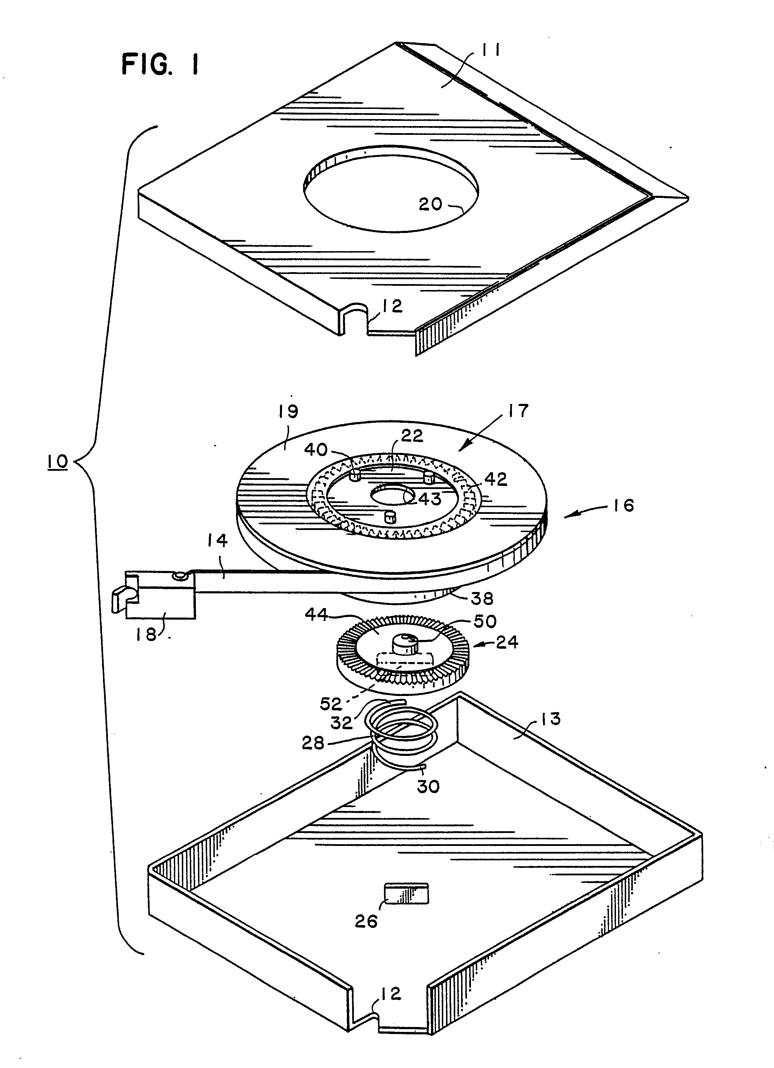

FIG. 1 illustrates a conventional "Segoma" type cartridge 10. such a cartridge is also shown and described in US-A-4,383,660.

The cartridge 10 includes a first half 11 and a second half 13 which are ultimately mated during assembly. Each half 11,13 has corresponding opening 12 in a corner thereof to allow the ribbon or tape 14 wound on a spool 16 to be withdrawn from the cartridge 10 via a leader 18 as known in the art. There is also an opening 20 in the first half 11 which allows an external drive means (not shown) access to a brake button 24 and the hub 17 of the spool 16 to rotate the spool 16 during operation to supply the tape 14.

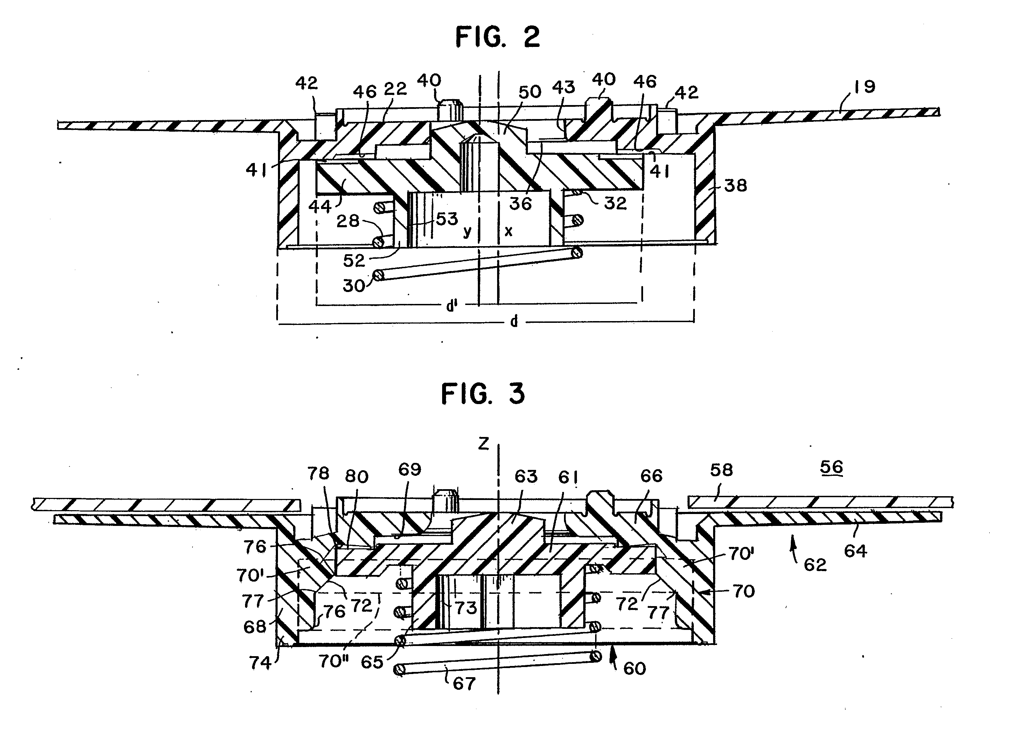

More particularly, the spool 16 includes both the hub 17 and an integrally formed planar flange 19. As shown in more detail in FIG. 2, the hub 17 includes a top portion 22 having three equally, radially spaced protuberances 40 (two shown) formed thereon which, during assembly, are deformed to secure a metal disk (not shown). The top portion 22 also includes a plurality of radially disposed teeth 12 which couple with the external drive means, and a centrally formed opening 43 for receiving a first projection or button 50 formed on the brake button 24. The hub 17 also includes a bottom portion 36 from which extends a circular annular wall 38.

The brake button 24 includes a circular disk 44, the first, upper projection 50 and a second, lower projection 52. When the hub 17 is mounted on the biased brake button 24 during assembly, a first step 41 of the circular disc 44 should be received by a first step 46 formed in the hub 17 and the first, upper projection 50 should center within the opening 43 formed in the hub 17. The second, lower projection 52 includes a rectangular recess 53 which is mounted on a rectangular projection 26 formed on the second half 13 of the cartridge 10.

The brake button 24 is biasly mounted via a coil spring 28. A first end 30 of the spring abuts the second half 13 of the cartridge 10 and a second end 32 of the spring 28 abuts the bottom portion 36 of the brake button 24 to normally bias both the brake button 24 and the spool 16 resting thereon in the direction of the first half 11 of the cartridge 10.

The inside diameter d of the annular wall 38 of the hub 17 is substantially larger than the outside diameter d' of the disk 44 portion of the brake button 24. This intentional difference in diameters creates a loose fit between the brake button 24 and the annular wall 38 to facilitate assembly. However, as can be seen in FIG. 2, it is possible, due to this relatively loose fit, that the brake button 24 can become oriented off-center of the hub 17 during assembly or mishandling during use. Compare the center line x of the hub 17 with the center line y of the brake button 24 in FIG. 2. Of course, the biased nature of the brake button 24 aggravates this misalignment since the brake button 24 is necessarily urged in the misaligned position via the spring 28. As a result, the brake button 24 is effectively disengaged, which disadvantageously allows dispensing of the ribbon when the cartridge 10 is not coupled to the external drive means. In addition, the misaligned brake button 24 interferes with proper coupling of the external drive means with the brake button 24.

It has also been observed in the industry that the rectangular recess 53 formed in the projection 52 has a tendency to bind relative to the projection 26 during assembly and operation of the brake button 24. Further, these brake buttons 24 are mounted on the projections 26 by machines. It has also been observed that a rectangular recess 53 and corresponding rectangular projection 26 do not provide the most time and cost efficient automation during assembly.

The present invention overcomes these drawbacks as will now be described in relation to the preferred embodiments of the present invention shown in FIGS. 3-5.

The present invention provides a means for ensuring positive, concentric alignment between the brake button and hub of a Segoma cartridge. More partricularly, the cartridge 56 of the present invention includes a spool 62 having both a flange 64 and an integrally formed hub 66. The hub 66 includes an annular wall 68 extending from the bottom portion 69 thereof.

A brake button 60 includes a substantially flat disk 61, an upper projection 63 and a lower projection 65. Again, a spring 67 biases the brake button 60 in the direction of the first half 58 of the cartridge 56.

A projecting means 70 is formed to extend from the inner circumference of the annular wall 68 of the hub 66. The projecting means 70 preferably includes an abutting surface 72 which is angled relative to a plane tangential to the annular wall 68 of the hub 66. That is, the projecting means 70 is wider near the area that the annular wall 68 is connected to the flange 64 than at the free end 74 of the annular wall 68.

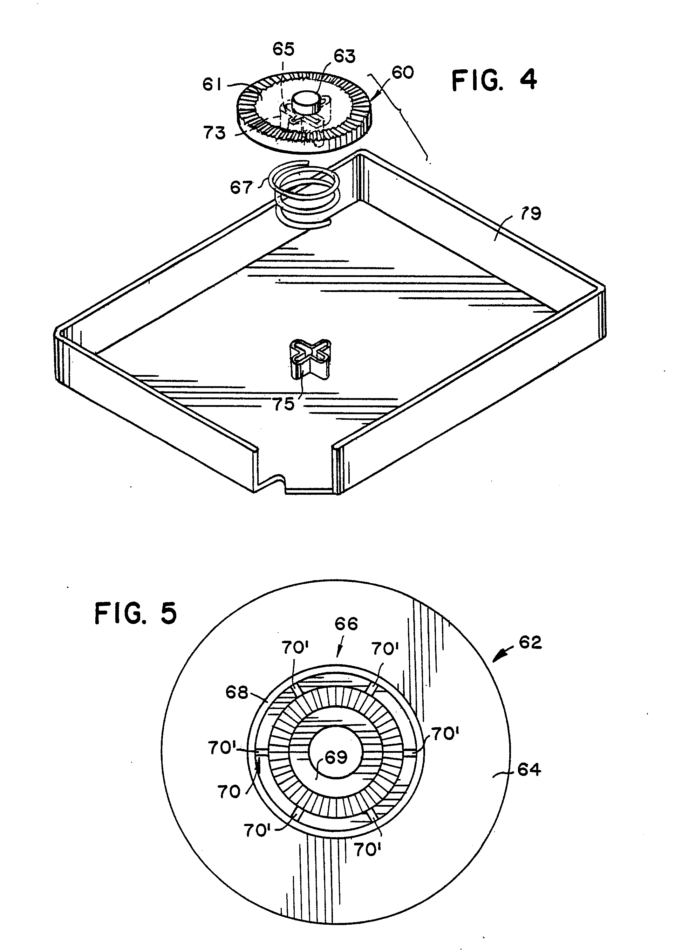

As best seen in FIGS. 3 and 5, preferably, the projecting means 70 is six projections or centering ribs 70' integrally molded to be equally, radially, spaced about the inner circumference of the annular wall 68. Alternatively, the projecting means 70 can constitute a single, continuous annular ring 70" as indicated by the phantom lines in FIG. 3.

Each projection 70' is about .3 inches high, about .19 inches wide at its widest portion and about .05 inches wide at its narrowest portion. Each projection 70' also includes two outer curves 76 about .05 radius and an inner curve 77 also about .05 radius. These curves 76, 77 cause the abutting surface 72 of the projection 70' to include angled, contoured steps which gradually and positively receive and position the circular brake button 60 concentrically relative to the hub 66 as discussed below.

Due to the projecting means 70, when the hub 66 is assembled relative to the brake button 60, the projecting means 70 necessarily receives the circumferential border of the disc 61 of the brake button 60, contains the brake button and maintains the brake button in the desired position, i.e., on center with the hub 66, as illustrated by the coincident center lines "z" of the brake button 60 and the hub 66. In this position, the first step 78 formed on the bottom portion 69 of the hub 66 advantageously receives the first step 80 formed on the brake button 61.

The lower projection 65 of the brake button 60 preferably includes a cross-shaped recess 73 formed therein, which receives in sliding relation a cross-shaped projection 75 formed on the second half 79 of the cartridge 56. Of course, a cross-shape is the equivalent of four, substantially columnar projections extending from the second half 79 of the cartridge 56. The combination of the cross-shaped recess 73 and projection 75 leads to less binding therebetween during assembly and operation of the brake button 60. In addition, this configuration also facilitates assembly by making the machine's task of mounting the brake button 60 on the second half 79 of the cartridge 56 easier.

As can be seen, incorporation of the projecting means 70 requires only minimal modifications to the structure of the hub 66. In addition, the projecting means 70 does not otherwise interfere with assembly or operation of the cartridge 56. And yet, the projecting means 70 allows positive seating of the brake button 60 relative to the hub 66 once assembled. Further, the means for mounting the brake button 60 relative to the second half 79 of the cartridge 56 further facilitates assembly and prevents binding of the centred brake button 60.

## Claims

1. A tape cartridge (10,56) comprising:-
   (a) first and second cartridge parts (11,12);
   (b) a circular brake button (24,60), which has a substantially planar part (44,61), biased for movement between the first and second cartridge parts; and ,
   (c) a spool (16,62) including a flange (19,64) and an integrally formed hub (17,66) the hub including a circular annular wall (38,68) projecting from one surface thereof; characterised in that projecting means (10) is formed on the inner circumference of the annular wall (68), and a surface (72) of the projecting means abuts the circular periphery of the brake button and maintains a substantially concentric relationship between the circular brake button and the circular annular wall of the hub.

2. A cartridge according to claim 1, wherein the projecting means comprises a plurality of projections (70) spaced circumferentially around the inner circumference of the annular wall (68).

3 A cartridge according to claim 1, wherein the projecting means is a single, continuous annular ring (70").

4. A cartridge according to any one of claims 1 to 3, wherein the projecting means is radially wider near the end of the annular wall connected to the hub than at the free end of the annular wall.

5. A cartridge according to claim 2, in which there are six projections (70") equally spaced around the inner circumference of the annular wall.

6. A cartridge according to any one of the predeeding claims, wherein the brake button (60) includes a projection (65) on one surface thereof including a cross-shaped recess (73) formed therein, and one of the cartridge parts (79) includes a corresponding cross-shaped projection (75) formed thereon the cross-shaped projection being slidingly received in the cross-shaped recess.

7. A tape cartridge according to claim 1, in which the projecting means (70) comprises; a plurality of projections (70') in equally spaced circumferential relationship, each projection being radially wider at an end of the annular wall connected to the hub than at a free end of the annular wall and in which a surface of each of the projections abuts the circular periphery of the brake button to maintain the substantially concentric relationship between the brake button and the annular wall of the hub.

8. A cartridge according to claim 7, wherein the brake button (60) includes a projection (65) on one surface thereof having a cross-shaped recess (73) formed therein, and one of the cartridge parts (79) includes a corresponding cross-shaped projection (75) formed thereon the cross-shaped projection being slidingly received by the cross-shaped recess.

FIG. 1

**FIG. 2**

**FIG. 3**

FIG. 4

65  63  60

61  73  67  79

75

FIG. 5

66  62

70'  70'

68  64

70'  70'

69

70

70'  70'